# EUROPEAN PATENT APPLICATION

(11) **EP 2 392 686 A1**
(43) Date of publication of application: **07.12.2011**
(21) Application number: 11168680.4
(22) Date of filing: 03.06.2011
(51) Int. Cl.: C23C 10/18, C23C 10/20, H01M 8/02

(54) **Method for manufacturing by aluminium diffusion a surface layer within a fuel cell component and corresponding oxidation resistant component**

(30) Priority: 03.06.2010 US 793368
(71) Applicant: General Electric Company, Schenectady, NY 12345 (US)
(72) Inventor: Goller, George Albert, Greenville, SC South Carolina 29615 (US); Cavanaugh, Dennis William, Greenville, SC South Carolina 29615 (US)
(74) Representative: Szary, Anne Catherine

(57) **Abstract**

An oxidation resistant fuel cell component and a method for creating an aluminum diffusion surface layer (10) within a fuel cell component to reduce chromium contamination occurring during operation of a fuel cell are disclosed. Generally, an aluminum-containing slurry may be applied to the fuel cell component. The component may then be heated to diffuse aluminum into the component and to form an aluminum diffusion surface layer (10) therein. The surface layer may be characterized by an intermetallic aluminum-containing phase extending below the surface (12) of the fuel cell component.

## Description

### FIELD OF THE INVENTION

The present subject matter relates generally to oxidation resistance for high temperature metal components and particularly to oxidation resistant fuel cell components and methods of creating an aluminum diffusion surface layer within fuel cell components.

### BACKGROUND OF THE INVENTION

High temperature fuel cells, such as solid oxide fuel cells (SOFC), allow for the direct conversion of chemical energy into electrical energy. Typically, a fuel cell includes an anode electrode, a cathode electrode, an electrolyte disposed between the anode and cathode, and a housing to physically retain the internal fuel cell components. Additionally, a plurality of individual fuel cells may often be disposed within a single housing, with the components each cell being separated by an interconnect or separator plate. During operation of a fuel cell, an oxygen-containing gas, such as air, flows along the cathode electrode and catalytically acquires electrons from the cathode, splitting the oxygen within the oxygen-containing gas into separate oxygen ions. These oxygen ions then diffuse into the electrolyte and migrate towards the anode. Fuel flowing past the anode then reacts catalytically with the oxygen ions to give off electrons, which may then be transported through the anode to an external circuit and back to the cathode. This transport of electrons provides a source of useful electrical energy to the external circuit.

Typically, fuel cells operate at relatively high temperatures. For example, the standard operating temperature within a SOFC may be about 1750° F (about 950° C). Such high operating temperatures generally necessitate the use of specialty alloys, such as nickel- or cobalt-containing alloys, as the base metal in forming fuel cell components. To provide such components with high oxidation resistance and, thus, an acceptable operating life within a fuel cell, chromium is typically used as an alloy addition to form an oxidation resistant chrome-oxide scale on the surface of the fuel cell component.

While a chrome-oxide scale generally provides sufficient oxidation resistance for metal component, its formation within a fuel cell can be problematic. In particular, the formation of chrome-oxides on the surface of a fuel cell component can lead to degradation of the fuel cell. For example, chromium poisoning or contamination may occur within a fuel cell when chromium reacts with oxidants present at the cathode to form highly volatile oxide gases. These gases typically migrate to and chemically react with the electrolyte of the fuel cell to form compounds, such as potassium chromate, sodium chromate, lithium chromate and the like, which chemically break down and degrade the electrolyte. As these chromium reactions continue to occur over time, the performance and efficiency of a fuel cell can be significantly reduced and such reactions may often render a fuel cell completely ineffective.

Efforts have been made to reduce or eliminate chromium contamination within a fuel cell through the development of specialty stainless steels and other high-alloy metals. However, these specialty alloys can be very expensive to produce, with material costs alone being significantly higher than lower grade/alloy steels.

Accordingly, fuel cell components formed from a relatively low cost material that may reduce chromium contamination within a fuel cell would be welcomed in the technology.

### BRIEF DESCRIPTION OF THE INVENTION

Aspects and advantages of the invention will be set forth in part in the following description, or may be obvious from the description, or may be learned through practice of the invention.

In one aspect, a method is generally disclosed for creating an aluminum diffusion surface layer within a fuel cell component to reduce chromium contamination during operation of a fuel cell. The method may include applying a slurry coating to a surface of the fuel cell component and heating the component to diffuse aluminum from the slurry coating into the component so as to form an aluminum diffusion surface layer within the component. The aluminum diffusion surface layer is characterized by an intermetallic aluminum-containing phase having a thickness of greater than 200 micrometers.

In another aspect, an oxidation resistant component for use in a fuel cell is generally disclosed. The component may include a base metal configured as a fuel cell component, wherein the base metal is substantially free from both nickel and cobalt and comprises up to about 27% chromium by weight. Additionally the component includes an aluminum diffusion surface layer extending below a surface of the base metal. The aluminum diffusion surface layer is characterized by an intermetallic aluminum-containing phase having a thickness of greater than 200 micrometers.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWING

A full and enabling disclosure of the present invention, including the best mode thereof, directed to one of ordinary skill in the art, is set forth in the specification, which makes reference to the appended figures, in which:
FIG. 1 is a micrograph showing an aluminum diffusion surface layer within a Cr-Mo-V-Nb-B alloy steel (9%Cr) in accordance with an embodiment of the present subject matter; and
FIG. 2 is a micrograph showing an aluminum diffusion surface layer within a cast 410 stainless steel (12%Cr) in accordance with an embodiment of the present subject matter.

### DETAILED DESCRIPTION OF THE INVENTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

The present subject matter is generally directed to oxidation resistant fuel cell components. In particular, the present subject matter provides that various low grade/alloy steels may be used to form a relatively low cost fuel cell component, which may then be subjected to a diffusion process to create an aluminum diffusion surface layer within the component. This aluminum diffusion surface layer permits the formation of a protective aluminide oxide (alumina) scale on the surface of the fuel cell component to prevent oxidation of the component. Such alumina scale may also prevent the formation of chrome-oxide on the surface of the fuel cell component, thereby reducing or eliminating the likelihood of chromium contamination occurring within a fuel cell. Further, the present subject matter discloses methods for creating an oxidation resistant, aluminum-rich diffusion layer within a fuel cell component in order to reduce or eliminate chromium contamination occurring during operation of a fuel cell. The method generally includes applying an aluminum-containing slurry to the surface of the component and heating the component to permit the aluminum within the slurry to diffuse into the metal component.

Generally, the inventors of the present subject matter have discovered that an oxidation resistance similar to that seen in various specialty alloys may also be exhibited in low grade/alloy steels treated with an aluminum diffusion process. For example, it has been found that aluminum may be diffused into various low cost steels, such as steels being substantially free from both nickel and cobalt, to form an aluminum diffusion surface layer that prevents the oxidation of such steels during exposure to high temperature oxidants (e.g., the high temperature air flowing past the cathode electrode of a fuel cell). In particular, oxidation testing has confirmed that an aluminum diffusion surface layer may be created in lower grade/alloy steels which is highly oxidation resistant at elevated temperatures for extended periods of time, as the aluminum within the diffusion layer forms a protective alumina scale that inhibits oxidation of the steel. Thus, for example, an aluminum diffusion surface layer may be formed in a 10Cr alloy steel (i.e. an alloy with a chromium content of about 8% to about 11 %, by weight). Testing has indicated that the surface layer within the 10Cr alloy steel forms a tight alumina scale which enables the steel to withstand an oxidizing environment at temperatures of about 1800° F with no signs of oxidation. Typically, a 10Cr alloy steel would rapidly oxidize at temperatures above approximately 1000° F, which generally would preclude the use of such steel within a fuel cell.

Additionally, it is believed that the formation of an aluminum diffusion surface layer within a fuel cell component can reduce or eliminate chromium contamination occurring within a fuel cell. In particular, the present inventors have found that application of the disclosed aluminum diffusion process to a low alloy/grade steel results in a relatively thick aluminum diffusion surface layer formed within the base metal of the steel (i.e. below the original surface of the base metal). This surface layer is characterized by a strong intermetallic aluminum-containing phase which is metallurgically part of the base metal and which has a thickness of up to about 400 micrometers. As a result of this surface layer, a stable, tight alumina scale is formed on the surface of the steel during exposure to oxidants. Thus, when formed on the surface a steel fuel cell component, the alumina scale serves as a protective barrier between the chromium contained within the base metal of the component and the high temperature oxidants housed within the fuel cell. As such, the alumina scale can reduce and even prevent the formation of chrome-oxide on the surface of the component, thereby reducing or eliminating fuel cell degradation due to chromium contamination.

It should be appreciated that the present subject matter is generally applicable to any fuel cell components that may be exposed to oxidants during operation of a fuel cell and, thus, have the potential to form volatile chrome-oxides at their surfaces. For example, numerous fuel cell components may be exposed to the high temperature oxidants (e.g., high temperature air) flowing adjacent to the cathode electrode of a fuel cell. Such components may include, but are not limited to, any separator plates used to separate individual cells of a fuel cell (e.g., in a stacked fuel cell configuration) and the fuel cell housing used to house the internal components of a fuel cell.

Additionally, it should be appreciated that the diffusion process of the present subject matter may be used to form an aluminum diffusion surface layer in both cast and wrought fuel cell components. For instance, various fuel cell components may be formed by a casting process. In treating such components, it has been found that the slurry coating process disclosed herein can be applied directly to the as-cast surface of the component. Thus, prior machining is not required to form an aluminum diffusion surface layer within the cast fuel cell component. Similarly, the slurry coating process can be applied directly to the surface of a wrought fuel cell component to form a protective aluminum surface layer within the component.

In one embodiment, the base metal used to form the low cost, oxidation resistant fuel cell component of the present subject matter may generally comprise any base steel being substantially free from both nickel and cobalt and including a chromium content, by weight, of up to 27%. It should be appreciated that, by substantially free from both nickel and cobalt, it is meant that the base metal generally includes an insignificant amount of nickel or cobalt, such as less than about 0.75%, by weight, of either nickel or cobalt. Thus, the base metal may comprise various relatively low cost, low grade/alloy steels. For example, in several embodiments, the base metal forming the fuel cell component may include, but is not limited to, a ferritic stainless steel having a chromium content, by weight, ranging from about 11% to about 27%, a martensitic stainless steel having a chromium content, by weight, ranging from about 11% to about 18%, a 10Cr alloy steel having a chromium content, by weight, ranging from about 8% to about 11%, an alloy steel having a chromium content, by weight, ranging from about 1% to about 8%, or a carbon steel having a carbon content, by weight, of about 0.01% to about 1.0% and containing little to no chromium.

According to one embodiment, the aluminum diffusion surface layer may be formed within the base metal of a fuel cell component by a slurry coating diffusion process in which aluminum is deposited and diffused into the surface of the formed fuel cell component. The slurry coating process makes use of an aluminum-containing slurry, the composition of which includes a donor material containing a metallic aluminum, a halide activator, and a binder. Notably missing from the ingredients of the slurry composition are inert fillers, such as inert oxide materials (e.g. aluminum oxide) whose particles are prone to sintering during the diffusion process. Additionally, although the present subject matter generally describes a slurry coating diffusion process, it is foreseeable that the aluminum diffusion surface layer may be formed within a substantially nickel- and cobalt-free fuel cell component by various other known diffusion processes, such as pack cementation, VPA and CVD processes.

Suitable donor materials for the slurry coating composition may generally include aluminum alloys with higher melting temperatures than aluminum, which has a melting point of approximately 1220° F (660° C). For example, donor materials may include, but are not limited to, metallic aluminum alloyed with chromium, cobalt and/or iron. Other suitable alloying agents having a sufficiently high melting point so as to not deposit during the diffusion process, but instead serve as an inert carrier for the aluminum of the donor material, should be apparent to those of ordinary skill in the art. In a preferred embodiment, the donor material comprises a chromium-aluminum alloy. Particularly, it has been found that the alloy 56Cr-44A1 (44%, by weight, aluminum, with the balance chromium and incidental impurities) is well-suited for diffusion processes performed over the wide range of diffusion temperatures contemplated by the present subject matter.

In one embodiment, the donor material may be in the form of a fine powder to reduce the likelihood that the donor material becomes lodged or entrapped in crevices, internal passages or the like of the fuel cell component. For example, in particular embodiments, the particle size for the donor material may be -200 mesh (a maximum diameter of not larger than 74 micrometers) or finer. However, it should be appreciated that powders with a larger mesh size may be used within the scope of the present subject matter. For instance, it is foreseeable that powders with a mesh size of 100 mesh (a maximum diameter of up to 149 micrometers) or larger may be used. Various halide activators may be used within the slurry coating composition. Particularly suitable halide activators may include ammonium halides, such as ammonium chloride (NH₄Cl), ammonium fluoride (NH₄F), ammonium bromide (NH₄Br) and mixtures thereof. It should be appreciated, however, that other halide activators may be used within the scope of the present subject matter. Generally, suitable halide activators are capable of reacting with the aluminum contained in the donor material to form a volatile aluminum halide (e.g. AlCl₃, AlF₃) that reacts at the surface of the fuel cell component and is diffused into the component to from the intermetallic aluminum-containing phase. Additionally, for use in the slurry, the halide activator may be in the form of a fine powder. Further, in some embodiments, the halide activator powder may be encapsulated to inhibit the absorption of moisture, such as when a water-based binder is utilized.

Suitable binders contained in the slurry coating composition may generally include an organic polymer. For example, in one embodiment, the binder may include various alcohol-based organic polymers, water-based organic polymers or mixtures thereof. As such, the binder may be capable of being burned off entirely and cleanly at temperatures below that required to vaporize and react the halide activator, with the remaining residue being essentially in the form of an ash that can be easily removed, for example, by forcing a gas, such as air, over the surface of the component following the diffusion process. Commercial examples of suitable water-based organic polymeric binders include a polymeric gel available under the name BRAZ-BINDER GEL from the VITTA CORPORATION (Bethel, CT). Suitable alcohol-based binders can be low molecular weight polyalcohols (polyols), such as polyvinyl alcohol (PVA). Additionally, in one embodiment, the binder may also incorporate a cure catalyst or accelerant such as sodium hypophosphite. It should be appreciated that various other alcohol- or water-based binders may be used within the scope of the present subject matter. Moreover, it is foreseeable that inorganic polymeric binders may also be suitable for use within the scope of the present subject matter.

Suitable slurry compositions generally have a solids loading (donor material and activator) of about 10% to about 80%, by weight, with the balance binder. More particularly, suitable slurry compositions may contain, by weight, donor material powder in the range of about 35% to about 65%, such as from about 45% to about 60% and all other subranges therebetween, binder in the range of about 25% to about 60%, such as from about 25% to about 50% and all other subranges therebetween, and halide activator in the range from about 1% to about 25%, such as from about 5% to about 25% and all other subranges therebetween. Within such ranges, the slurry composition may have a consistency that allows its application to a fuel cell component by a variety of methods, including spraying, dipping, brushing, injection, etc.

Additionally, it has been found that the slurry compositions of the present subject matter can be applied to have a non-uniform green state thickness (i.e. an un-dried thickness) and still produce an intermetallic aluminum-containing phase of very uniform thickness. Further, it has been found that the disclosed slurry compositions may be capable of producing an inwardly diffused, aluminum-rich surface layer over a broad range of diffusion temperatures, generally in a range of about 1500° F to about 2100° F (about 815°C to about 1150° C), such as from about 1800° F to about 2000° F (about 980° C to about 1090° C) and all other subranges therebetween.

After applying the slurry to the surface of a formed component, such as a wrought or cast fuel cell component, the component may be immediately placed in a coating chamber or retort to perform the diffusion process. Additional slurry coatings or activator materials are not required to be present in the retort. The retort may then be evacuated and backfilled with an inert or reducing atmosphere (such as with argon or hydrogen). The temperature within the retort may then be raised to a temperature sufficient to burn off the binder, for example from about 300° F to about 400° F (about 150° C to about 200° C), with further heating being performed to attain the desired diffusion temperature described above, about 1500° F to about 2100° F, during which time the halide activator is volatilized, an aluminum halide is formed and aluminum is deposited on the surface of the component. The component is then held at such diffusion temperature for a duration of about 2 hours to about 12 hours, such as about 2 hours to about 4 hours, to allow the aluminum to diffuse into the surface of the component.

Following the diffusion process, the fuel cell component may be removed from the retort chamber and cleaned of any residues remaining in and/or on the component. It has been found that such residues are essentially limited to an ash-like residue of the binder and residue of donor material particles, the latter of which being primarily the metallic constituent (or constituents) of the donor material other than aluminum. These residues may be readily removed, such as with forced gas flow, without resorting to more aggressive removal techniques, such as wire brushing, glass bead or oxide grit burnishing, high pressure water jet, or other such methods that entail physical contact with a solid or liquid to remove firmly attached residues.

As indicated above, the slurry coating diffusion process may be used to form a diffusion surface layer, characterized by an intermetallic aluminum-containing phase, within a substantially nickel- and cobalt-free fuel cell component. The thickness of such surface layer may vary depending primarily on the diffusion temperature, as well as the duration of the diffusion treatment. However, the thickness of the aluminum diffusion surface layer may range, as measured from the surface of the component to the location within the base metal at which the aluminum concentration is 0%, from about 25 micrometers to about 400 micrometers, such as about 200 micrometers to about 400 micrometers or, about 250 micrometers to about 350 micrometers, and all other subranges therebetween. Without wishing to be bound by any particular theory, it is believed that such relatively deep surface layers, particularly thicknesses greater than 200 micrometers, may be achieved due to the particular aluminum diffusion process utilized as well as the absence of nickel and cobalt from the base metal.

Additionally, the aluminum content of the surface diffusion layer may also vary depending on, but not limited to, the diffusion temperature and the duration of the treatment. Generally, it has been found that the aluminum content at the surface of the fuel cell component may range from about 10% to about 14%, by weight, such as from about 12% to about 14% and all other subranges therebetween, with the aluminum content reducing to 0% at the interface between the aluminum diffusion surface layer and the non-diffused base metal. Thus, the surface layer may be a graded layer having a diminishing aluminum concentration from the surface of the component into its thickness. Moreover, it is foreseeable that the aluminum content at the surface of the fuel cell component may be greater than 14%, by weight, given differing diffusion temperatures and durations as well as differing percentages of aluminum content within the slurry composition.

Moreover, it has also been found that the aluminum diffusion surface layer formed in the lower grade/lower alloy steels is relatively ductile and malleable. Generally, the hardness of the surface layer may be within the Rockwell B scale. In particular, hardness values of the surface layer may range in the mid to upper Rockwell B scale, such as from about 70 HRB to about 95 HRB or from about 75 HRB to about 90 HRB and all other subranges therebetween. As such, fuel cell components formed from the steels contemplated by the present subject matter and subjected to the described slurry coating diffusion process may be less likely to be chipped, scratched or cracked during installation. It should be noted that all hardness values referenced herein were taken using a Knoop hardness test and converted to the Rockwell B scale. Specifically, a pyramidal diamond was pressed into a cross-sectioned surface of the material of interest and the resulting indentation was measured using a microscope.

Additionally, the hardness of the surface layer, as well as other mechanical and oxidation resistant characteristics of the surface layer, remains unaffected by heat treatment of the non-diffused base metal. Thus, it should be appreciated that, after the aluminum diffusion process, the base metal of a fuel cell component may be heat treated to obtain any desired mechanical properties. For example, it was found that a component may be annealed or quenched and tempered without altering the properties of the aluminum diffusion surface layer.

Further, as indicated above, the aluminum diffusion surface layer generally forms a protective alumina scale on the surface of the fuel cell component that resists oxidation of the component and also prevents the formation of chrome oxide. As such, the aluminum diffusion surface layer can effectively reduce or eliminate chromium contamination within a fuel cell by preventing the formation of volatile chromium compounds that lead to degradation of the fuel cell. It should be appreciated that the fuel cell component may be subjected to a pre-oxidation treatment, such as by exposing the component to an oxidant in a controlled atmosphere, to form the protective alumina scale on its surface. However, oxidation testing has indicated that the alumina scale will form on the surface of an aluminum diffused component within a relatively short time frame, such as within a few hours, during constant exposure to an oxidizing environment.

The examples which follow are merely illustrative, and should not be construed to be any type of limitation on the scope of the claimed invention

### Example 1

A slurry coating composition was prepared having the following slurry composition, by weight: 50% chromium aluminum (56Cr-44Al), 10% ammonium chloride, the balance being VITTA BRAZ-BINDER GEL. The chromium aluminum was in powder form having a particle size of -200 mesh.

Ten test pieces were also prepared from a forged Cr-Mo-V-Nb-B alloy steel (9.0-9.6% Cr, 1.50-1.70% Mo, 0.25-0.30% V, 0.045-0.065% Nb, 0.008-0.012% B). The test pieces each had an approximate size of 25.4x25.4x12.7 mm (1x1x0.5 inches). A slurry coating of non-uniform thickness was applied directly to the surface of each of the test pieces. The coating was applied by pouring the slurry mixture over the test pieces and spreading the mixture around the entire surface of each test piece.

The test pieces were placed in a retort, which was then purged with argon until a -40° F dew point was achieved. The temperature within the retort was then heated to the diffusion temperature indicated in Table 1 (i.e., 1600° F, 1800° F or 2000° F) and held at such temperature for the duration indicated in Table 1 (i.e., 2 hours, 3 hours, 4 hours or 12 hours). The argon gas flow was maintained during heating. The retort was then cooled under argon gas and the test pieces were removed from the retort and sectioned to permit the thickness of their aluminum diffusion surface layers to be measured. The results of such measurements are summarized in Table 1.

**TABLE 1**

| Surface Layer Thickness at Diffusion Temperature/Duration | | | |
|---|---|---|---|
| | | | |
| Test Piece | Diffusion Temperature (ºF) | Duration (hours) | Surface Layer Thickness (micrometers (inches)) |
| # 1 | 1600 | 2 | 25 (0.001) |
| # 2 | 1600 | 3 | 51 (0.002) |
| # 3 | 1600 | 4 | 76 (0.003) |
| # 4 | 1800 | 2 | 178 (0.007) |
| # 5 | 1800 | 3 | 254 (0.010) |
| # 6 | 1800 | 4 | 356 (0.014) |
| # 7 | 2000 | 2 | 203 (0.008) |
| # 8 | 2000 | 3 | 330 (0.013) |
| # 9 | 2000 | 4 | 305 (0.012) |
| # 10 | 2000 | 12 | 356 (0.014) |

The thickness of the aluminum diffusion surface layer within each test piece varied depending on both the diffusion temperature and duration of exposure, with thicknesses ranging from 25 micrometers to 356 micrometers. The hardness of the surface layer for each test piece was measured, with the hardness measurements ranging from about 79 HRB to about 85 HRB.

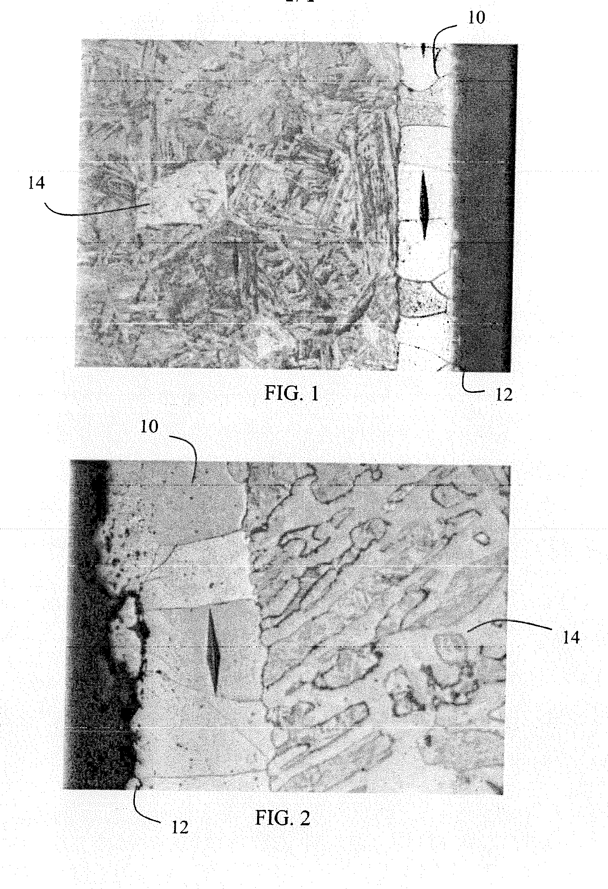

FIG. 1 is a micrograph of test piece # 9 (duration temperature = 2000° F and duration = 4 hours) after being quenched and tempered. As can be seen, an aluminum diffusion surface layer 10 was formed in the Cr-Mo-V-Nb-B alloy steel between the original surface 12 of the steel and the non-diffused base metal 14. It was found that the surface layer 10 comprised an intermetallic iron-chromium-aluminum phase, with the aluminum content, by weight, being about 14% at the original surface 12 and reducing to 0% at the interface of the surface layer 10 and the non-diffused base metal 14. Additionally, it was noted that the surface layer 10 exhibited a unique single-wide grain structure. After quench and temper, the hardness of the non-diffused base metal 14 was measured at approximately 50 HRC, while the hardness of the surface layer 10 remained at approximately 80 HRB.

### Example 2

A slurry coating composition was prepared having the following slurry composition, by weight: the percentage of chromium aluminum (56Cr-44A1) indicated in Table 2, 10% ammonium chloride, the balance being VITTA BRAZ-BINDER GEL. The chromium aluminum was in powder form having a particle size of -200 mesh.

Four test pieces were prepared from a forged Cr-Mo-V-Nb-B alloy steel (9.0-9.6% Cr, 1.50-1.70% Mo, 0.25-0.30% V, 0.045-0.065% Nb, 0.008-0.012% B). The test pieces each had an approximate size of 25.4x25.4x12.7 mm (1x1x0.5 inches). A slurry coating of non-uniform thickness was applied directly to the surface of each of the test pieces. The coating was applied by pouring the slurry mixture over the test pieces and spreading the mixture around the entire surface of each test piece.

The test pieces were placed in a retort, which was then purged with argon until a -40° F dew point was achieved. The temperature within the retort was then heated to a diffusion temperature of 2000° F and held at such temperature for a duration of 4 hours. The argon gas flow was maintained during heating. The retort was then cooled under argon gas and the test pieces were removed from the retort chamber and sectioned to permit the thickness of their aluminum diffusion surface layers to be measured. The results of such measurements are summarized in Table 2.

**TABLE 2**

| Surface Laver Thickness with Differing Slurry Compositions | | |
|---|---|---|
| | | |
| Test Piece | Chromium Aluminum Composition | Surface Layer Thickness (micrometers (inches)) |
| # 1 | 10% | 221 (0.0087) |
| # 2 | 20% | 218 (0.0086) |
| # 3 | 30% | 244 (0.0096) |
| # 4 | 50% | 305 (0.012) |

The thickness of the aluminum diffusion surface layer within each test piece varied only slightly depending on the percentage of chromium aluminum in the slurry coating, with the largest variation observed with a 50% chromium aluminum composition. The surface layers were characterized by an intermetallic iron-chromium-aluminum phase underlying the original surface of the test pieces. The hardness of the surface layer for each test piece was measured, with average hardness measurements at approximately 80 HRB.

### Example 3

A slurry coating composition was prepared having the following slurry composition, by weight: 50% chromium aluminum (56Cr-44A1), 10% ammonium chloride, the balance being VITTA BRAZ-BINDER GEL. The chromium aluminum was in powder form having a particle size of -200 mesh.

A test piece was prepared from a cast 410 stainless steel (12%Cr). The test piece had an approximate size of 25.4x25.4x12.7 mm (1x1x0.5 inches). A slurry coating of non-uniform thickness was applied directly to the as-cast surface of the test piece. The coating was applied by pouring the slurry mixture over the test piece and spreading the mixture around the entire surface of the test piece.

The test piece was placed in a retort, which was then purged with argon until a -40° F dew point was achieved. The temperature within the retort was then heated to a diffusion temperature of 2000° F and held at such temperature for a duration of 4 hours. The argon gas flow was maintained during heating. The retort was then cooled under argon gas and the test piece was removed from the retort chamber and sectioned to permit the thickness of the aluminum diffusion surface layer to be measured.

FIG. 2 is a micrograph of the cast 410 stainless steel test piece following the diffusion treatment. As can be seen, an aluminum diffusion surface layer 10 was formed within the test piece between the original surface 12 of the alloy and the non-diffused base metal 14. The surface layer 10 was characterized by an intermetallic iron-chromium-aluminum phase. The thickness of surface layer 10 was approximately 200 micrometers (0.008 inches). Additionally, it was noted that the surface layer 10 exhibited a unique single-wide grain structure. The hardness of the non-diffused base metal 14 was measured at approximately 25 HRC, with the hardness of the surface layer 10 being measured at about 88 HRB to about 90 HRB.

### Example 4

A slurry coating composition was prepared having the following slurry composition, by weight: 50% chromium aluminum (56Cr-44A1), 10% ammonium chloride, the balance being VITTA BRAZ-BINDER GEL. The chromium aluminum was in powder form having a particle size of -200 mesh.

A test piece was prepared from a carbon steel (0.18%C, 1.5%Mn). The test piece had an approximate size of 25.4x25.4x12.7 mm (1x1x0.5 inches). A slurry coating of non-uniform thickness was applied directly to the surface of the test piece. The coating was applied by pouring the slurry mixture over the test piece and spreading the mixture around the entire surface of the test piece.

The test piece was placed in a retort, which was then purged with argon until a -40° F dew point was achieved. The temperature within the retort was then heated to a diffusion temperature of 2000° F and held at such temperature for a duration of 2 hours. The argon gas flow was maintained during heating. The retort was then cooled under argon gas and the test piece was removed from the retort chamber and sectioned to permit the thickness of its surface diffusion layer to be measured.

It was found that an aluminum diffusion surface layer was formed within the carbon-steel between the original surface of the alloy and the non-diffused base metal. The surface diffusion layer was characterized by an intermetallic iron-aluminum phase having a thickness of approximately 190 micrometers (0.0075 inches). The hardness of the non-diffused base metal was measured at approximately 90 HRB, with the hardness of the surface layer being measured at about 80 HRB to about 85 HRB.

### Example 5

A slurry coating composition was prepared having the following slurry composition, by weight: 50% chromium aluminum (56Cr-44A1), 10% ammonium chloride, the balance being VITTA BRAZ-BINDER GEL. The chromium aluminum was in powder form having a particle size of -200 mesh.

Several test pieces were prepared from a forged Cr-Mo-V-Nb-B alloy steel (9.0-9.6% Cr, 1.50-1.70% Mo, 0.25-0.30% V, 0.045-0.065% Nb, 0.008-0.012% B). The test pieces each had an approximate size of 25.4x25.4x12.7 mm (1x1x0.5 inches). A slurry coating of non-uniform thickness was applied directly to the surface of each of the test pieces. The coating was applied by pouring the slurry mixture over the test pieces and spreading the mixture around the entire surface of each test piece.

The test pieces were placed in a retort, which was then purged with argon until a -40° F dew point was achieved. The temperature within the retort was then heated to a diffusion temperature of 2000° F and held at such temperature for a duration of 4 hours. The argon gas flow was maintained during heating. The retort was then cooled under argon gas.

The test pieces were then removed from the retort chamber and subjected to oxidation testing. The test pieces were placed in a controlled, oxidizing environment at 1800° F for 5000 hours. The test pieces were then examined and no signs of oxidation were found. A protective alumina scale had formed on the surface of each test piece during testing. Typically, the alloy steel tested would rapidly oxidize at temperatures above about 1000° F.

### Example 6

A slurry coating composition was prepared having the following slurry composition, by weight: 50% chromium aluminum (56Cr-44A1), 10% ammonium chloride, the balance being VITTA BRAZ-BINDER GEL. The chromium aluminum was in powder form having a particle size of -200 mesh.

Several test pieces were prepared from a cast 410 stainless steel (12%Cr). The test pieces each had an approximate size of 25.4x25.4x12.7 mm (1x1x0.5 inches). A slurry coating of non-uniform thickness was applied directly to the as-cast surfaces of each test piece. The coating was applied by pouring the slurry mixture over the test pieces and spreading the mixture around the entire surface of each test piece.

The test pieces were placed in a retort, which was then purged with argon until a -40° F dew point was achieved. The temperature within the retort was then heated to a diffusion temperature of 2000° F and held at such temperature for a duration of 4 hours. The argon gas flow was maintained during heating. The retort was then cooled under argon gas.

The test pieces were then removed from the retort chamber and subjected to oxidation testing. The test pieces were placed in a controlled, oxidizing environment at 1800° F for 5000 hours. The test pieces were then examined and no signs of oxidation were found. A protective alumina scale had formed on the surface of each test piece during testing. Typically, the alloy steel tested would rapidly oxidize at temperature above about 1200° F.

Examples 1-6 illustrate that a relatively thick aluminum diffusion surface layer may be created in a fuel cell component formed from a base metal being substantially free from nickel and cobalt. Such surface layer may prevent oxidation of the fuel cell component by forming a protective alumina scale in the presence of high temperature oxidants. Thus, this relatively stable alumina scale serves to replace the volatile chrome-oxide scale that would typically form on the surface of a fuel cell component. As such, the present subject matter provides for the creation of oxidation resistant fuel cell components that may be produced using low grade/alloy steels at a fraction of the cost generally associated with the use of specialty alloys and that may reduce or eliminate chromium contamination occurring within a fuel cell.

## Claims

1. A method for creating an aluminum diffusion surface layer (10) within a fuel cell component, the method comprising:
applying a slurry coating to a surface (12) of a fuel cell component, said slurry coating comprising a metallic aluminum alloy, a halogen activator, and a binder; and
heating said fuel cell component to diffuse aluminum from said slurry coating into said fuel cell component to form an aluminum diffusion surface layer (10) within said fuel cell component, said aluminum diffusion surface layer (10) **characterized by** an intermetallic aluminum-containing phase having a thickness of greater than 200 micrometers, wherein said fuel cell component is formed from a base metal (14) being substantially free from both nickel and cobalt and comprising up to about 27% chromium by weight.

2. The method of claim 1, wherein the thickness of said aluminum diffusion surface layer (10) is greater than 200 micrometers and less than about 400 micrometers.

3. The method of claim 1 or claim 2, wherein the thickness of said aluminum diffusion surface layer (10) is about 250 micrometers to about 350 micrometers.

4. The method of any preceding claim, wherein said base metal (14) comprises between about 8% to about 11 % chromium by weight.

5. The method of any one of claims 1 to 3, wherein said base metal (14) comprises between about 11% to about 27% chromium by weight.

6. The method of any one of claims 1 to 3, wherein said base metal (14) comprises between about 1% to about 8% chromium by weight.

7. The method of any one of claims 1 to 3, wherein said base metal (14) comprises less than 1% chromium by weight.

8. The method of any preceding claim, wherein said fuel cell component comprises a cast fuel cell component, said slurry coating being applied to an as-cast surface of said cast fuel cell component.

9. An oxidation resistant component for use in a fuel cell, the oxidation resistant component comprising:
a base metal (14) configured as a fuel cell component, said base metal (14) being substantially free from nickel and cobalt and comprising up to about 27% chromium by weight; and
an aluminum diffusion surface layer (10) extending below a surface (12) of said base metal (14), said aluminum diffusion surface layer (10) **characterized by** an intermetallic aluminum-containing phase having a thickness of greater than 200 micrometers.

10. The oxidation resistant component of claim 9, wherein the thickness of said aluminum diffusion surface layer (10) is greater than 200 micrometers and less than about 400 micrometers.

11. The oxidation resistant component of claim 9 or claim 10, wherein the thickness of said aluminum diffusion surface layer (10) is from about 250 micrometers and to about 350 micrometers.

12. The oxidation resistant component of any one of claims 9 to 11, wherein said base metal (14) comprises between about 8% to about 11 % chromium by weight.

13. The oxidation resistant component of any one of claims 9 to 11, wherein said base metal (14) comprises between about 11% to about 27% chromium by weight.

14. The oxidation resistant component of any one of claims 9 to 11, wherein said base metal (14) comprises between about 1% to about 8 % chromium by weight.

15. The oxidation resistant component of any one of claims 9 to 11, wherein said base metal (14) comprises less than about 1% chromium by weight.
